Europäisches Patentamt

European Patent Office

Office européen des brevets

(19)

(11) Veröffentlichungsnummer: **0 142 696**

**A2**

(12) # EUROPÄISCHE PATENTANMELDUNG

(21) Anmeldenummer: 84112166.8

(22) Anmeldetag: 11.10.84

(51) Int. Cl.⁴: **A 47 G 19/30**
**A 47 G 19/26, A 47 J 47/10**

(30) Priorität: 12.10.83 DE 8329464 U

(43) Veröffentlichungstag der Anmeldung:
29.05.85 Patentblatt 85/22

(84) Benannte Vertragsstaaten:
AT BE CH DE FR GB IT LI NL SE

(71) Anmelder: WOPEX V.O.F.
Malderburcht Straat 544
NL-6535 NV Nijmegen(NL)

(72) Erfinder: van den Berg, Christian
Malderburchtstrasse 544
NL-6535 NV Nijmegen(NL)

(74) Vertreter: Patentanwälte Schulze Horn und Hoffmeister
Goldstrasse 36
D-4400 Münster(DE)

(54) **Vakuumvorratsbehälter.**

(57) Vakuumvorratsbehälter für leicht verderbliches Gut, insbesondere Brot, Kuchen und dergleichen, mit einem am Behälter dichtend anleigenden Behälterdeckel, bei dem der Behälter (1) einen von Hand zu betätigenden und durch sein Absenken das Vakuum erzeugenden Membranboden (3) aufweist.

Fig. 2

Croydon Printing Company Ltd.

EP 0 142 696 A2

## Vakuumvorratsbehälter

Die Erfindung betrifft einen Vakuumvorratsbehälter für leicht verderbliches Gut, insbesondere Brot, Kuchen und dergleichen, mit einem am Behälter dichtend anliegenden Behälterdeckel.

Backwaren, z.B. Brot oder Brötchen, stellen an ihren Aufbewahrungsort besondere Ansprüche. Bei zu luftiger Lagerung trocknen sie, besonders wenn sie schon vorgeschnitten sind, sehr rasch aus. Wenn sie in geschlossenen Behältern aufbewahrt werden, kann mitunter bei geeigneter Luftfeuchtigkeit und Temperatur ein ideales Klima für das Wachstum von Schimmelpilzen erzeugt werden.

Gut lagern lassen sich Backwaren in einem evakuierbaren Behälter, wie er durch das DE-GM 75 34 781 bekannt ist. Dieser Behälter, der einen mit einer Dichtung versehenen Deckel aufweist, wird durch eine angeschlossene Saugpumpe evakuiert. Zur Entnahme von Backwaren kann der Behälter über ein Ventil belüftet werden. Ein solcher Vorratsbehälter erfordert einen festen Standplatz, an dem ein Stromanschluß vorhanden ist. Er ist ferner von seinem Aufbau her dazu geschaffen, große Backwarenmengen aufzunehmen.

Der Erfindung liegt die Aufgabe zugrunde, einen Vakuumvorratsbehälter zu schaffen, der unabhängig von einer elektrischen Anschlußmöglichkeit ist. Der Behälter soll einfach zu bedienen sein und so gestaltet sein, daß er auch zur Aufbewahrung kleinerer Backwarenmengen geeignet ist.

Diese Aufgabe wird erfindungsgemäß dadurch gelöst, daß der Behälter einen von Hand zu betätigenden und durch sein Absenken das Vakuum erzeugenden Membranboden aufweist.

Es hat sich gezeigt, daß in dem erfindungsgemäßen Vakuumvorratsbehälter, der über eine Vakuumpumpeinheit von Hand evakuierbar ist, Brötchen und geschnittenes Brot nahezu backfrisch längere Zeit aufbewahrt werden können. Selbst nach 14 Tagen ist der frische Brotgeschmack kaum beeinträchtigt.

Bei bevorzugten Ausführungsformen des Vakuumvorratsbehälters ist der Behälterdeckel als Glocke ausgebildet und liegt mit seinem, mit einer umlaufenden Dichtung versehenen Rand auf einer Grundplatte auf. Zur guten Abdichtung des Behälters weisen Dichtung und Grundplatte aufeinanderliegende Paßflächen auf.

Der erfindungsgemäße Vakuumvorratsbehälter ist besonders für kleine Haushaltungen geeignet, bei denen Brot oder andere Backwaren nicht schnell verzehrt werden, sondern üblicherweise mehrere Tage bis zu ihrem Verbrauch vergehen. Eine Einsatzmöglichkeit bietet aber auch der Hotelbereich. Am frühen Morgen ausgeteilte Brötchen können im Vorratsbehälter auch für später zum Frühstück erscheinende Gäste frisch gehalten werden. Der Vakuumvorratsbehälter ist von der Form her so ansprechend gestaltet, daß er in das Frühstücksgedeck einbezogen werden kann.

Ausführungsbeispiele der Erfindung sind in den Zeichnungen dargestellt und werden im folgenden näher beschrieben. Es zeigen:

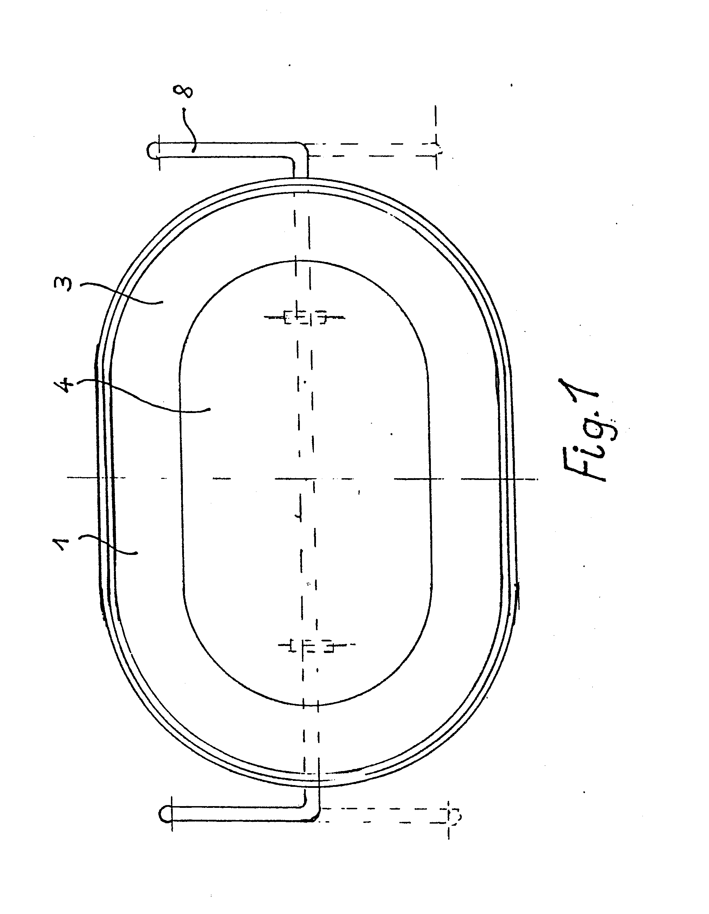

Figur 1 eine Draufsicht auf einen Behälter gemäß der Erfindung,

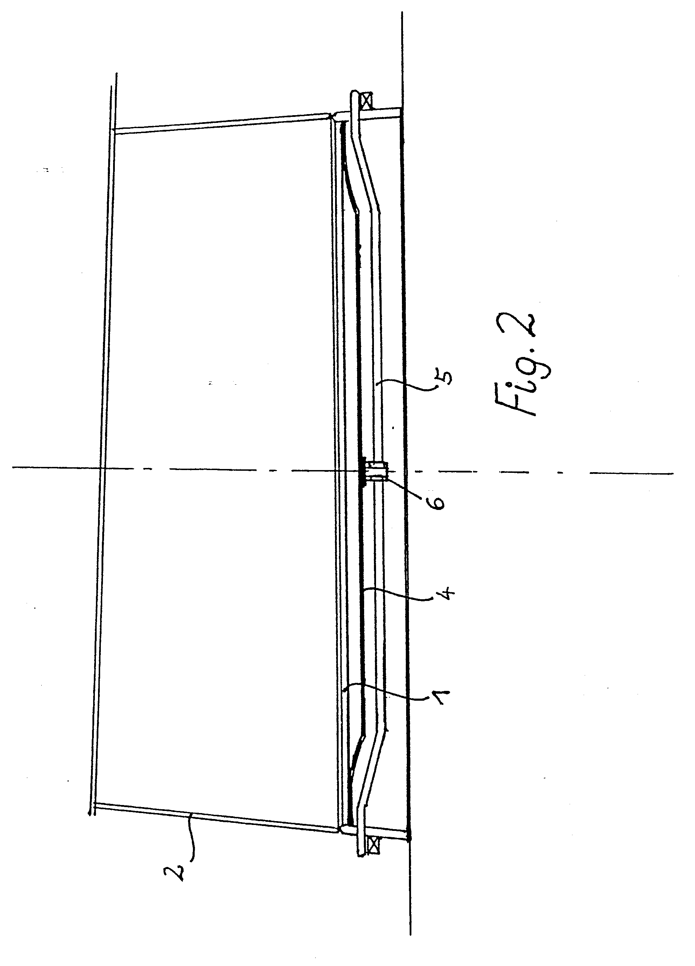

Figur 2 eine Seitenansicht eines solchen Behälters mit einem aufgesetzten, glockenförmigen Deckel (Teilschnitt),

Figur 3 eine Seitenansicht gemäß Figur 2 mit einem anderen Dichtungsrand des Behälters,

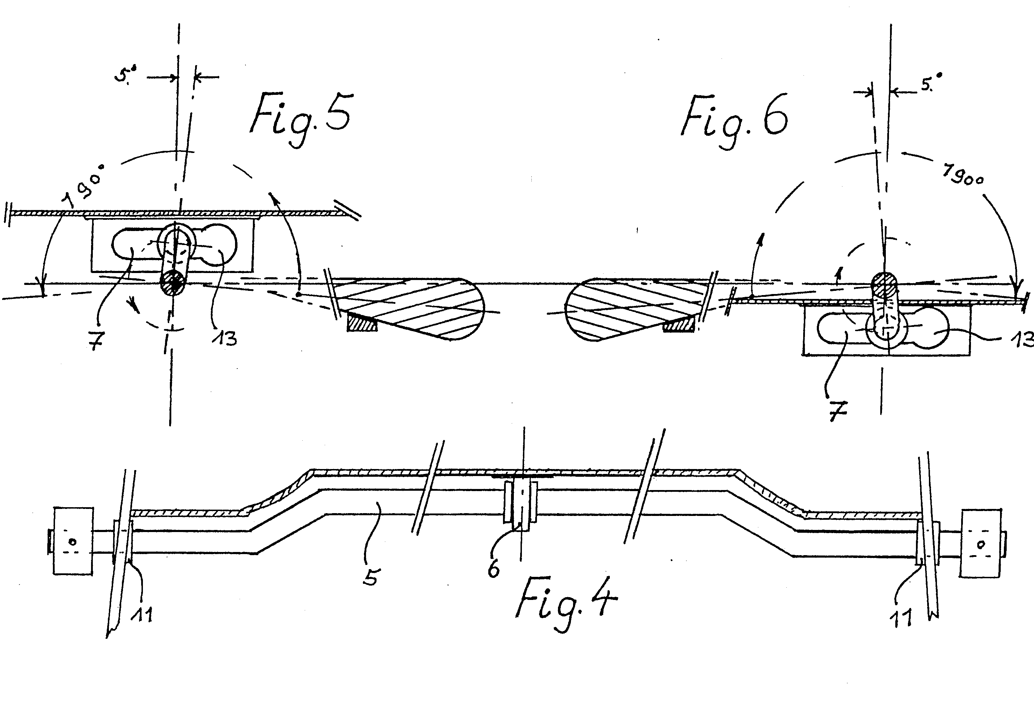

Figur 4 schematisch den Membranboden mit der Exzenterwelle,

Figur 5 eine Seitenansicht der Darstellung gemäß Figur 4 in angehobener Stellung des Membranbodens,

Figur 6 die Seitenansicht gemäß Figur 5 mit abgesenktem Membranboden,

Figur 7 eine andere Ausgestaltung der Dichtung zwischen Deckel und Behälter kurz vor dem Aufsetzen und

Figur 8 die Dichtungsanordnung gemäß Figur 7 in Gebrauchsstellung.

Gemäß den Figuren ist der Behälter 1 relativ flach und kann tellerartig geformt sein, wobei der Deckel 2 Glocken- oder Schalenform aufweist und auf den Behälter 1 aufgestülpt wird.

Der Behälter 1 weist an seinem Rand 10 eine mit einer Dichtung 12 gefüllte Mulde auf, und der Rand des Deckels 2 wird in den Dichtungsstoff, z.B. Moosgummi, einfach

4

eingesetzt.

0142696

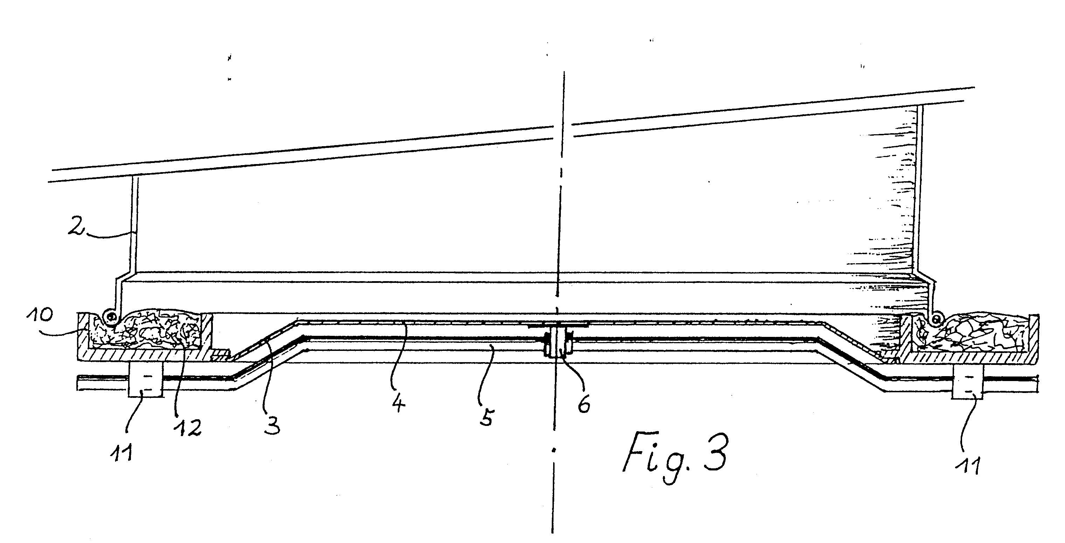

Figur 3 zeigt in diesem Zusammenhang auf der rechten Seite einen etwas engeren Deckel und auf der linken Seite einen weiteren Deckel, die beide mit dem gleichen Dichtungsstreifen 9 trotz des unterschiedlichen Durchmessers dichtend zu arbeiten vermögen.

Der Behälter 1 weist einen Membranboden 3 auf, wobei eine feste Mittelplatte 4 mit dem Membranmaterial verbunden ist, so daß die Beweglichkeit der Membran nahe dem Behälterrand vorliegt. Unterhalb des Membranbodens ist eine Exzenterwelle 5 angeordnet, die beidseitig am Behälterrand in Lagern 11 gelagert ist und mittels eines Handgriffs 8 manuell verschwenkbar ist.

In ihrer Mitte ist die Exzenterwelle 5 in einer Führung 6 gelagert, die an der festen Mittelplatte befestigt ist und ein Langloch 7 aufweist. Durch Bewegen des Handgriffes und Verschwenken der Exzenterwelle 5 kann dadurch die Mittelplatte 4 des Membranbodens 3 gehoben oder gesenkt werden. Nach Aufsetzen des Deckels 2 wird durch das Absenken innerhalb des Behälters ein leichtes Vakuum erzeugt, welches durch das Verschwenken der Exzenterwelle 5 in entgegengesetzte Richtung wieder aufgehoben wird.

Das Langloch 7 weist seitlich eine größere Öffnung 13 auf, in welcher die Exzenterwelle 5 nach dem Absenken arretiert werden kann.

Die Dimension des Langloches ist weiterhin derart, daß die Exzenterwelle in einem Winkel von mehr als $180^\circ$, vorzugsweise $190^\circ$ verschwenkt werden kann und dadurch die Arretierung wirksam wird.

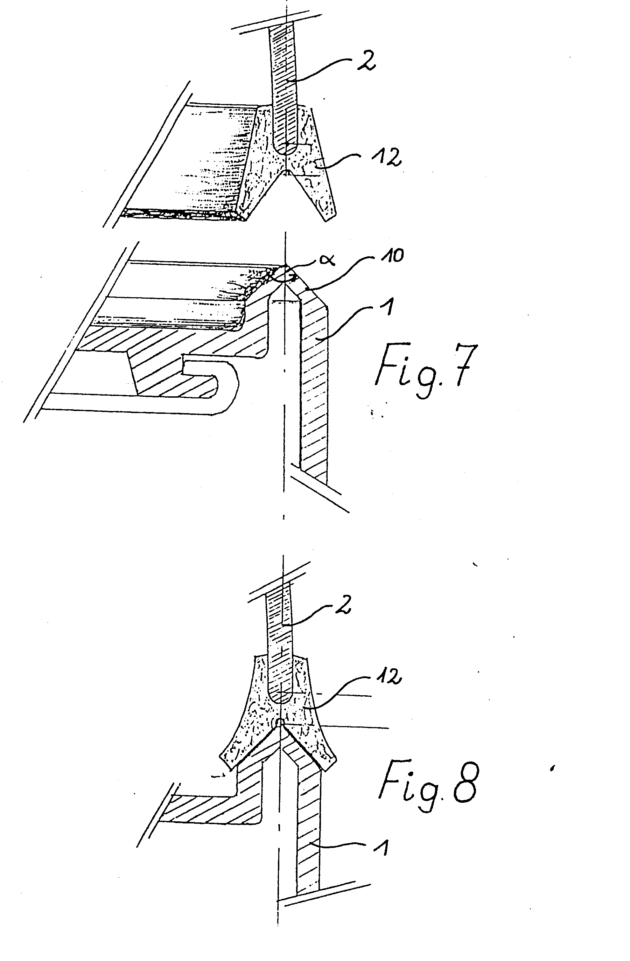

In den Figuren 7 und 8 sind weitere Ausbildungen der Dichtung zwischen Behälter und Deckel dargestellt. Der Deckel 2 trägt dabei die Dichtung 12, welche ebenso wie der Behälterrand im Querschnitt konisch ausgebildet ist. Die Winkel zwischen den beiden konischen Flächen sind aber unterschiedlich, da der Öffnungwinkel der Dichtung 12 geringfügig geringer ist als der Mittelwinkel $\alpha$ des Behälterrandes 10.

Beim Aufsetzen des Deckelrandes gemäß Figur 8 spreizt sich also die Dichtung 12 und schließt so absolut luftdicht ab, so daß das eingestellte Vakuum über lange Zeit unverändert erhalten bleiben kann.

Die Exzenterwelle 5 besteht aus einem elastischen Material und ist derart dimensioniert, daß sie beim Anlegen einer zu hohen Kraft eine Durchbiegung erfährt und damit die Hubhöhe des Membranbodens begrenzt. Die Erzeugung eines zu starken Vakuums, welches die Membran zerstören könnte, wird dadurch sicher vermieden.

Der Aufbau des erfindungsgemäßen Vakuumvorratsbehälters ist höchst einfach und effektiv und es kann daher von einer idealen Lösung der anstehenden Probleme gesprochen werden.

Patentansprüche:

1. Vakuumvorratsbehälter für leicht verderbliches Gut, insbesondere Brot, Kuchen und dergleichen, mit einem am Behälter dichtend anliegenden Behälterdeckel, dadurch gekennzeichnet, daß der Behälter (1) einen von Hand zu betätigenden und durch sein Absenken das Vakuum erzeugenden Membranboden (3) aufweist.

2. Vakuumvorratsbehälter nach Anspruch 1, gekennzeichnet durch einen als Glocke ausgebildeten Behälterdeckel (2), dessen mit einer umlaufenden Dichtung (12) versehener Rand auf dem Behälterrand (10) aufliegt.

3. Vakuumvorratsbehälter nach Anspruch 1 oder 2, dadurch gekennzeichnet, daß Dichtung (12) und der Behälterrand (10) aufeinanderliegende im Querschnitt konische Paßflächen aufweisen.

4. Vakuumvorratsbehälter nach Anspruch 3, dadurch gekennzeichnet, daß der Behälterrand (10) einen größeren Mittelwinkel $\alpha$ aufweist, als der Mittelwinkel der Dichtung (12).

5. Vakuumvorratsbehälter nach Anspruch 1, dadurch gekennzeichnet, daß der Membranboden (3) eine feste Mittelplatte (4) aufweist.

6. Vakuumvorratsbehälter nach Anspruch 5, gekennzeichnet durch eine von Hand zu betätigende Exzenterwelle (5), deren exzentrischer Teil in einer Führung (6) beweglich ist, die an der Mittelplatte (4) befestigt ist.

7. Vakuumvorratsbehälter nach Anspruch 6, dadurch gekennzeichnet, daß die Exzenterwelle (5) elastisch und so dünn ist, daß sie nur ein so geringes Dehmoment zu übertragen vermag, daß das durch die Bewegung des Membranbodens (3) erzeugte Vakuum 2 % nicht übersteigt.

8. Vakuumvorratsbehälter nach Anspruch 5 - 7, dadurch gekennzeichnet, daß die Führung (7) aus einem das Verdrehen der Exzenterwelle um mehr als 180$^{o}$ gestattenden Langloch (7) besteht.

9. Vakuumvorratsbehälter nach Anspruch 8, dadurch gekennzeichnet, daß das Langloch (7) einseitig eine Öffnung (13) aufweist, in dem die Exzenterwelle (5) selbstarretierend nach Absenken des Membranbodens einrastet.

Fig.1

Fig. 2

0142696

Fig. 3

0142696

Fig.6

Fig.5

Fig.4

Fig.7

Fig.8